# EUROPEAN PATENT SPECIFICATION

(11) **EP 2 202 039 B1**
(45) Date of publication and mention of the grant of the patent: **19.07.2017**
(21) Application number: 09178689.7
(22) Date of filing: 10.12.2009
(51) Int. Cl.: B27B 1/00, G01N 23/02, G01N 33/46, G06Q 10/00

(54) **Method for identifying the cutting pattern for pieces of wood such as logs**
Verfahren zum Erkennen des Schnittbildes von Holzerzeugnissen, wie Baumstämme
Procédé d'identification d'un schéma de coupe pour des éléments en bois tels que des billons

(30) Priority: 19.12.2008 IT VR20080137
(43) Date of publication of application: 30.06.2010
(73) Proprietor: MICROTEC S.r.l., 39042 Bressanone (Bolzano) (IT)
(72) Inventor: Giudiceandrea, Federico, 39042, Bressanone (Bolzano) (IT)
(74) Representative: Ponchiroli, Simone

(56) References cited:
- WO-A1-01/77669
- WO-A2-02/091286
- DE-A1- 19 936 312
- Schmoldt et al.: "Nondestructive Evaluation of Hardwood Logs" U.S. Forest Service vol. 15, 31 December 1999 (1999-12-31), pages 279-309, XP002557859 Retrieved from the Internet: URL:http://www.treesearch.fs.fed.us/pubs/1 195> [retrieved on 2009-11-25]
- SUCHENDRA ET AL.: "automated planning and optimazation of lumber production using machine vision and computer tomography" IEEE TRANSACTIONS ON AUTOMATION SCIENCE AND ENGINEERING, vol. 5, no. 4, 31 October 2008 (2008-10-31), pages 677-695, XP002557860

## Description

This invention relates to a method for setting the cutting pattern for pieces of wood such as logs. Such a method is known from Schmoldt et al.: "Nondestructive Evaluation of Hardwood Logs",U.S. Forest Service,vol. 15 31 December 1999 (1999-12-31), pages 279-309, which discloses the preamble of claim 1. One of the most important requirements in the wood processing sector is to make the best possible use of the wood, minimising waste and maximising profits.

Consequently, the way in which each piece of wood (and in particular each log) is cut is very important.

It is known that in order to decide on the cutting method for each piece of wood, said piece of wood is subjected in advance to set of examinations to ascertain the position of any defects such as cracks, knots and the like, as well as to determine its structural properties.

Based on the results of said examinations, for each piece of wood it is possible to identify a cutting pattern which is able to minimise waste, at the same time guaranteeing semi-finished products which on average are of good quality.

It should also be noticed that this invention relates to any type of cutting pattern, irrespective of the products to be obtained from the piece of wood. In general, cutting patterns may be grouped in two large families, those intended for producing planks (which consist of a plurality of cutting surfaces which are flat and generally perpendicular to each other) and those intended for producing plywood (which consist of a surface wound on itself in a spiral with a predetermined constant pitch equal to the thickness of the plywood to be obtained).

Regarding this latter family, the spiral cutting pattern is normally obtained using a peeling machine, which peels the outer part of the log with a predetermined thickness, gradually as the log rotates about a predetermined axis of rotation which is normally parallel with its main direction of extension.

However, all prior art technologies for selection of the cutting pattern have significant disadvantages.

As regards planks, the main disadvantage is the fact that despite minimising waste, the products obtained are in many cases of less than optimum quality in terms of their internal structural properties. However, said circumstance may be verified only upon completion of cutting, when the physical appearance of the various products obtained can be examined.

As is known, the quality of a wooden element (plank or other) may be determined based on its surface appearance. Plank evaluation equipment is currently used which determines plank quality and therefore market economic value based on their physical appearance.

Selecting the cutting pattern with the methods used up to now, it was noticed that, despite minimising wood waste, the economic value of the material obtained is always far from the maximum which could be obtained with different cutting patterns.

Similar problems are also encountered when producing plywood. In this latter case, when deciding on the cutting pattern the log axis of rotation, the peeling start point and, above all, the thickness of the plywood to be obtained must all be decided.

However, the quality of the plywood obtained can only be established afterwards. For example, only once peeling has been completed can one verify the compactness of the wood fibres or the distribution of knots, and establish if the plywood can be sold or must be rejected.

For example, when the wood fibre is not very compact or there are many knots and/or relatively large knots, the plywood may be used, and therefore sold, only if it is relatively thick. In contrast, when the fibre is compact and there are few and relatively small knots present, the plywood may be used and sold even if it is thin. However, as already indicated, the cutting thickness (like other cutting parameters) must be selected in advance.

Consequently, even as regards plywood cutting, the economic value which can normally be obtained is below the maximum which could potentially be obtained with a better cutting pattern.

In this situation, the technical purpose which forms the basis of this invention is to provide a method for setting the cutting pattern for pieces of wood such as logs which overcomes the above-mentioned disadvantages.

In particular, the technical purpose of this invention is to provide a method for setting the cutting pattern for pieces of wood such as logs which allows the cutting pattern to be optimised compared with prior art methods.

This invention also has for a technical purpose to provide a method for setting the cutting pattern for pieces of wood such as logs which allows the economic value of the semi-finished products obtained from each piece of wood to be maximised.

The technical purpose specified and the aims indicated are substantially achieved by a method for setting the cutting pattern for pieces of wood such as logs as described in the appended claims.

Further features and the advantages of this invention are more apparent in the detailed description of several preferred, non-limiting embodiments of a method for setting the cutting pattern for pieces of wood such as logs with reference to the accompanying drawings, in which:
- Figure 1 is a schematic axonometric view of a three-dimensional model of a piece of wood to be cut;
- Figure 2 is a schematic view of the arrangement on the front side of the model of Figure 1 of a first possible cutting pattern for producing planks;
- Figure 3 is a schematic view of the arrangement on the front side of the model of Figure 1 of a second possible cutting pattern for producing planks;
- Figure 4 is a schematic view of the arrangement on the front side of the model of Figure 1 of a first possible cutting pattern for producing plywood;
- Figure 5 is a schematic view of the arrangement on the front side of the model of Figure 1 of a second possible cutting pattern for producing plywood;
- Figure 6 is a schematic front view of the virtual physical appearance of a plank obtained from the model of Figure 1 according to the indications of this invention.

The method for setting the cutting pattern for pieces of wood such as logs in accordance with this invention involves first an operating step for obtaining a virtual three-dimensional model 1 of the density of the piece of wood. Said operating step may be carried out either by simply taking a three-dimensional model 1 previously developed, or by developing it at the moment when the cutting pattern is to be decided.

Advantageously, the three-dimensional model 1 consists of a plurality of basic volumes 2 each having its own constant density. It should be noticed that, in this invention the term basic volumes 2 refers to volumes of material whose size is substantially defined by the resolution with which the three-dimensional model 1 is developed (more details provided below).

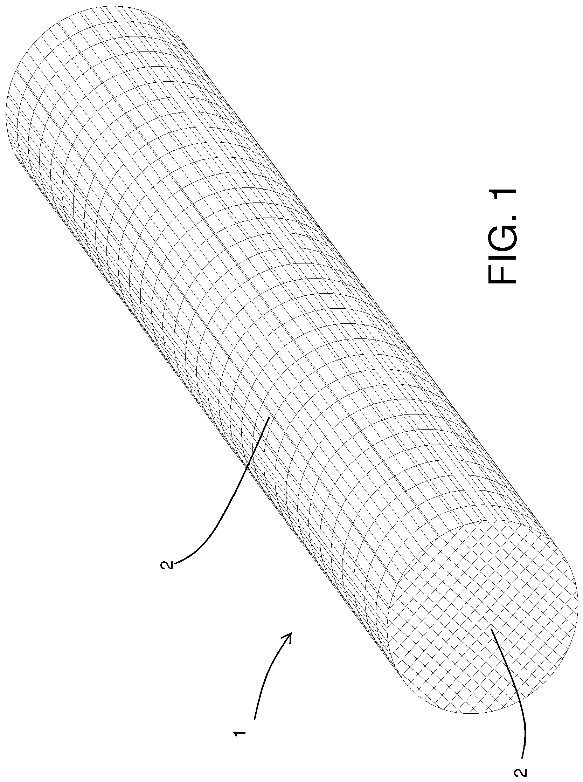

Figure 1 shows the schematic example of the three-dimensional model 1 of a log (schematically illustrated as a cylinder having an elliptical cross-section) highlighting a plurality of basic volumes 2 of which it is made up. It should be noticed that in the example illustrated, the size of the basic volumes 2 is shown in an exaggeratedly large way only so as to provide a quality explanation of the idea. In contrast, in reality, each basic volume 2 will advantageously be of the smallest possible size.

In particular, in the preferred embodiment of this invention, the three-dimensional model 1 of the density of the piece of wood is obtained by means of a tomographic scan of the piece of wood. In this case, the size of each basic volume 2 is therefore given by the resolution of the tomograph in the three spatial dimensions.

The starting point of the method according to this invention is therefore to prepare a virtual model of the piece of wood to be cut. As shown in Figure 1, said model consists of a plurality of small cells side by side (the basic volumes 2), each having its own density value which is assumed to be constant.

On a practical level, the virtual three-dimensional model 1 of the piece of wood may be managed at an information technology level using suitable software.

The next step of the method according to this invention is to virtually cut, again using information technology/electronic tools, the piece of wood by acting on the three-dimensional model 1, thus obtaining virtual semi-finished products 3 (planks, plywood or the like), and to evaluate the quality of said virtual semi-finished products 3 based on the information about the density which can be obtained from the three-dimensional model 1. It should be noticed that in this context the term "virtual" is always used to indicate that they are not actual cuts made in the actual piece of wood, but are cuts made in the virtual three-dimensional model 1 of the piece of wood.

To do that, the method involves an operating step of selecting a possible first virtual cutting pattern 4 to be applied to the piece of wood.

The virtual cutting pattern 4 usually consists of one or more virtual cutting surfaces, suitably arranged relative to each other, and which, once applied to the three-dimensional model 1 of the piece of wood, with a predetermined positioning/orientation relative to it, allow one or more virtual semi-finished products 3 to be obtained from the piece of wood (as well as waste material). It should be noticed that advantageously said cutting surfaces may also have a predetermined thickness so that they reflect in every way an actual cut made in the actual piece of wood (where the material located at the cutting blade path is usually lost in the form of shavings).

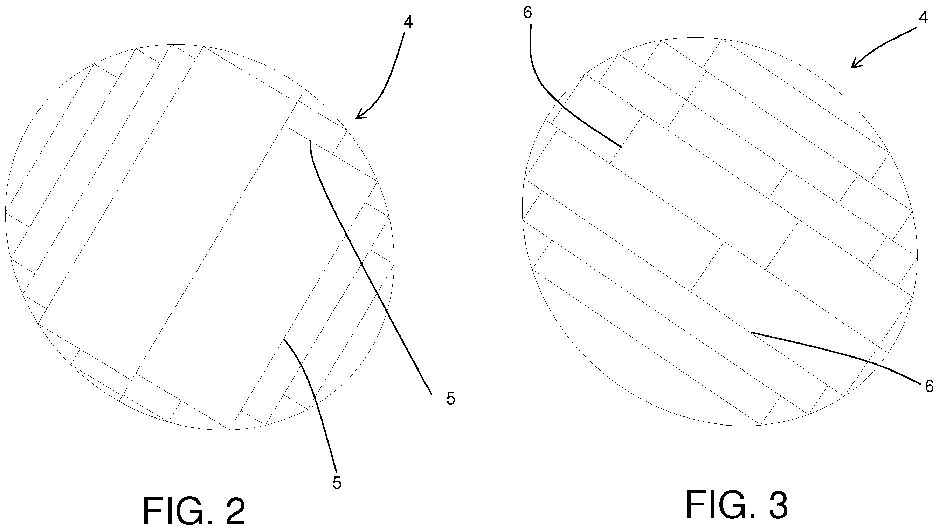

Figures 2 to 5 show the projection, on the leading face of the three-dimensional model 1 of Figure 1, of a plurality of different cutting patterns 4 (which advantageously may or may not extend in an identical fashion along the entire length of the piece of wood).

In particular, Figure 2 shows a first cutting pattern 4 consisting of a plurality of flat first virtual cutting surfaces 5 extending parallel with the main direction of extension of the piece of wood to be cut.

Similarly, Figure 3 shows a different cutting pattern 4 also consisting of a plurality of flat second virtual cutting surfaces 6 extending parallel with the main direction of extension of the piece of wood to be cut.

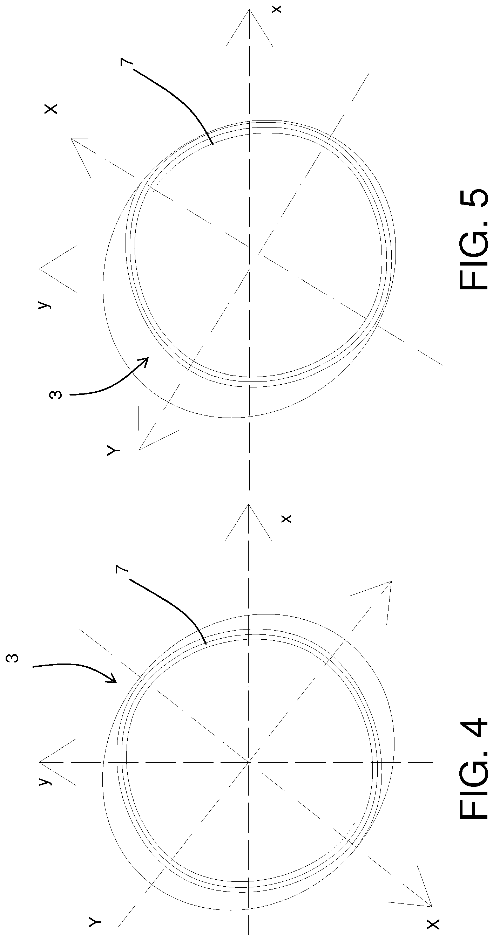

Figures 4 and 5 show cutting patterns 4 each consisting of at least one spiral third virtual cutting surface 7 (of which only the start is shown, the remaining part continuing in the same way to the centre of the spiral). It should be noticed that the term spiral surface refers to the cutting surface which can be produced using a peeling machine, that is to say, a surface wound on itself with a constant pitch, about a central axis and which forms spirals in the planes perpendicular to said axis.

It should be noticed that the cutting patterns 4 of Figures 2 and 3 are virtual cutting patterns 4 intended for producing planks, whilst those of Figures 4 and 5 are intended for producing plywood.

Once the first virtual cutting pattern 4 has been selected, the method involves applying it to the three-dimensional model 1 of the piece of wood to obtain the one or more virtual semi-finished products 3.

Said virtual semi-finished products 3 are, in turn, virtual three-dimensional models of pieces of wood which are smaller than the starting piece (the sum of their volumes is equal to the volume of the starting piece of wood minus the volume occupied by the waste). Each virtual semi-finished products therefore has its own outer surface formed by the intersection of the one or more virtual cutting surfaces and a set of adjacent basic volumes 2 amongst those forming the three-dimensional model 1.

The method disclosed then involves the operating step of virtually associating, with at least part of the set of basic volumes 2 forming the virtual semi-finished products 3, the corresponding density determined on the basis of the three-dimensional model 1.

Depending on requirements, the density may be associated either with the entire volume of the semi-finished products 3 or only with their outer surface. In the latter case, the density is associated with at least part of the basic volumes 2 forming the outer surface of the one or more virtual semi-finished products 3, in particular, advantageously, with those which form its outer surface at one or more main faces (explained in more detail below).

Associating the density with the outer surface of the virtual semi-finished products 3 allows a virtual reconstruction of the physical appearance at one or more faces. Visually, it is possible to associate different density levels with different colour shades, precisely as is normally done with tomographic representations. For example, using the grey scale, it is possible to associate light greys (up to white) with relatively low densities, and dark greys (up to black) with relatively high densities. Using the colour range on brown shades, suitably calibrated, it is possible to obtain a realistic representation of the semi-finished products 3.

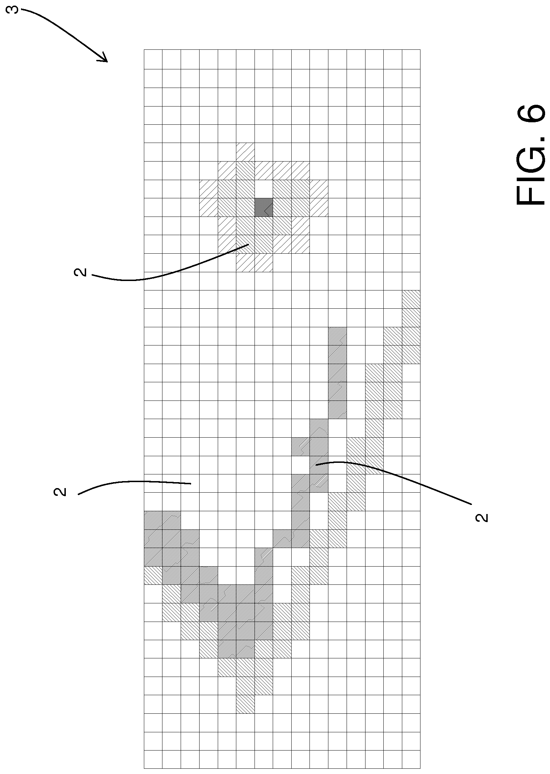

For a quality example, Figure 6 shows the face of a plank on which various shades of grey (hatched) are used to identify the different densities of the individual basic volumes 2 (again large only for the purpose of explanation).

As explained in more detail below, once the step of associating the density is complete, the method according to the invention may involve either saving the results obtained for subsequent processing, or immediately processing them to obtain further information which, in turn, may be saved for subsequent use. This point is also referred to below.

In general, the method according to the invention involves repeating the steps of selecting the cutting pattern 4, applying the cutting pattern 4 to the three-dimensional model 1 of the piece of wood and associating the density with the virtual semi-finished products 3, for a plurality of different possible cutting patterns 4, with one or more different virtual semi-finished products 3 corresponding to each pattern.

In other words, the method involves simulating cutting of the piece of wood in many different ways, so that the results obtained can then be compared (according to the methods explained below).

As can easily be inferred, since it is not possible to apply infinite cutting patterns 4 to each piece of wood, it is always necessary to select in advance which cutting patterns 4 to verify based on production requirements (the need for planks rather than plywood, dimensions involved, etc.) and based on the type of wood, and on all of the other information made available in advance by prior examinations normally already carried out on the piece of wood. In other words, the cutting patterns 4 may advantageously be those which currently appear to be potentially valid on each occasion and amongst which sawmills currently often have to choose in a completely arbitrary way.

However, in general, the various virtual cutting patterns 4 which are adopted may differ from each other both in absolute and in relative terms.

The patterns differ in absolute terms when the reciprocal arrangement of the virtual cutting surfaces varies between the cutting patterns 4. This situation is, for example, shown in Figures 2 and 3 where the two cutting patterns 4 are completely different to one another.

In contrast, they differ in relative terms when the reciprocal arrangement of the virtual cutting surfaces is the same, but their arrangement varies relative to the piece of wood. This situation corresponds to that illustrated in Figures 4 and 5 where the cutting patterns 4 are both formed by a spiral surface with the same pitch, but which, relative to the piece of wood has a different central axis and a different starting point for the peeling. To make that idea clearer, Figures 4 and 5 show two Cartesian plane reference systems x, y and X, Y, the first integral with the piece of wood and the second integral with the cutting pattern 4. As can be seen, whilst in Figure 4 the two reference systems have the same centre but are rotated relative to one another, in Figure 5 as well as being rotated differently relative to one another there is also a shifted centre.

In other words, the various cutting patterns 4 may have cutting surfaces having a different reciprocal orientation/positioning, or virtual cutting surfaces having the same reciprocal orientation but a different orientation/positioning relative to the piece of wood.

Finally, it should be noticed that, in the case of spiral surfaces, where there is usually only one cutting surface, the term different reciprocal positioning/orientation substantially refers to the different pitch of the spiral.

According to this invention, the method for selecting the actual cutting pattern with which the piece of wood will actually be cut involves comparing the virtual semi-finished products 3 which can be obtained with the different virtual cutting patterns 4 and, on the basis of said comparison, selecting from the virtual cutting patterns 4 the actual cutting pattern which will be used as the basis for proceeding with cutting of the piece of wood.

The comparison step may relate to any property of the virtual semi-finished products 3 which can be determined on the basis of the density previously associated with them. For that reason, the comparison step may be carried out either directly on the basis of the different density maps which can be obtained from the different cutting patterns 4 or on the basis of the properties derivable from said maps (this being the preferred solution, since it allows the amount of information to be saved to be minimised).

However, preferably, the aim of the comparison step is to find amongst the cutting patterns 4 the one able to maximise the overall commercial economic value of the semi-finished products 3 which can be obtained from the piece of wood. Consequently, although said aim may be achieved on the basis of a direct comparison of the properties of the virtual semi-finished products 3, in the preferred embodiment the method according to this invention involves, before the comparison step, an additional step of evaluating the economic value of the semi-finished products 3, carried out on the basis of their density distribution, and the comparison step is carried out by simply comparing the sums of the economic values of the semi-finished products 3 which can be obtained with each cutting pattern 4.

Therefore, the virtual cutting pattern 4 selected to become the actual cutting pattern will be the one which allows the maximum overall economic value to be obtained regarding the semi-finished products 3.

Therefore, advantageously, once the density has been associated with the semi-finished products 3 it is possible to determine their consequent economic value and to save, for each cutting pattern 4 exclusively the overall economic value of all of the semi-finished products 3 which can be obtained with that cutting pattern 4.

Therefore, as indicated, the criteria on the basis of which the comparison is made, like those for evaluating the economic value may be many, each based on different properties of the semi-finished products 3 which can be determined on the basis of their density distribution.

However, in the preferred embodiment, both the comparison step and the economic value evaluation step are carried out on the basis of the physical appearance of the semi-finished products 3 since, in the known way, this is indicative of the structural/mechanical properties of the semi-finished products 3 obtained.

In the preferred embodiment, the operating step of associating the density with the virtual semi-finished products 3 is carried out to virtually define the physical appearance of the semi-finished products 3 (or, at least of their main faces); whilst the step of comparing the virtual semi-finished products 3 which can be obtained using the different cutting patterns 4 is carried out by directly or indirectly comparing the physical appearances of the semi-finished products 3. Consequently, even the step of selecting the actual cutting pattern is carried out on the basis of the physical appearance of the virtual semi-finished products 3 which can be obtained with that cutting pattern 4. Moreover, advantageously, the comparison between the physical appearances is of the indirect type, since before the comparison step the step of evaluating the economic value of the semi-finished products 3 is carried out on the basis of the same evaluation techniques used today for evaluating cut wood (the only difference being that, in the case of this invention, it is not an actual image of the wood which is examined, but a virtual possible image of it).

To summarise what was described above, according to the invention, given a virtual three-dimensional model 1 of the piece of wood to be cut, the first steps involved are those of selecting several cutting patterns 4, virtually applying them to the three-dimensional model 1 to obtain virtual semi-finished products 3, and associating with at least part of each of them the density which can be obtained on the basis of the three-dimensional model.

At this point, there is either a direct comparison of the density maps obtained, or, for each density map one or more properties of the semi-finished products 3 is determined (such as the physical appearance).

Again, there is either a direct comparison of the properties thus determined, or a step of evaluating the economic value of the virtual semi-finished products 3 on the basis of said properties. At that point the comparison will be directly between the overall economic values.

In general, during the comparison step (irrespective of how it is carried out) the final step is performed, of selecting the virtual cutting pattern 4 to be transformed into the actual cutting pattern. Said pattern advantageously corresponds to the one which provides the best properties of the semi-finished products or their maximum economic value.

This invention brings important advantages.

First, the method for setting the cutting pattern for pieces of wood such as logs according to the invention allows optimisation of the cutting pattern compared with prior art methods, in the sense that it allows reliable prediction of the quality of the semi-finished products which will be obtained by the cutting.

Second, the method allows the economic value of the semi-finished products obtained from each piece of wood to be maximised.

It should also be noticed that this invention is relatively easy to produce and that even the cost linked to implementing the invention is not very high.

## Claims

1. A method for setting the cutting pattern for pieces of wood such as logs, comprising the operating steps of:
obtaining a virtual three-dimensional model (1) of a piece of wood;
selecting a possible first virtual cutting pattern (4) for the piece of wood which may allow one or more semi-finished products (3) to be obtained from the piece of wood, said cutting pattern (4) consisting of one or more virtual cutting surfaces (5), (6), (7);
virtually applying the first virtual cutting pattern (4) to the three-dimensional model (1) of the piece of wood to obtain one or more virtual semi-finished products (3);
repeating the selection and application steps for a plurality of different possible cutting patterns (4), each corresponding to one or more different virtual semi-finished products (3);
comparing the virtual semi-finished products (3) which can be obtained with the different cutting patterns (4) and, on the basis of said comparison, selecting from the virtual cutting patterns (4) one cutting pattern (4) which will be used as the basis for proceeding with actual cutting of the piece of wood,
the method being **characterised:**
**in that** the step of obtaining a virtual three-dimensional model (1) of the piece of wood consists in obtaining a virtual three-dimensional model (1) of the density of the piece of wood, said three-dimensional model (1) consisting of a plurality of basic volumes (2) each having its own constant density;
**in that** each of the one or more virtual semi-finished products (3) has its own outer surface formed by the intersection of the one or more virtual cutting surfaces (5), (6), (7) and a set of adjacent basic volumes (2) amongst those forming the three-dimensional model (1);
**in that** it also comprises the step of virtually associating, with at least part of the set of basic volumes (2) forming the virtual semi-finished products (3), the corresponding density determined on the basis of the three-dimensional model (1);
**in that** in the repeating step also the association step is repeated for the plurality of different possible cutting patterns (4);
**in that** the step of virtually associating, with at least part of the set of basic volumes (2) forming the virtual semi-finished products (3), the corresponding density determined on the basis of the three-dimensional model (1), involves associating the density with at least part of the basic volumes (2) forming the outer surface of the one or more semi-finished products (3);
**in that** the association step is carried out to virtually define the physical appearance of the semi-finished products (3); and
**in that** the step of comparing the virtual semi-finished products (3) which can be obtained with the different cutting patterns (4) is carried out on the basis of the virtually defined physical appearance of the semi-finished products (3).

2. The method according to claim 1, **characterised in that** it also comprises, for each virtual cutting pattern (4), the operating step of determining the economic value of the virtual semi-finished products (3) which can be obtained with the cutting pattern (4), and also being **characterised in that** the actual cutting pattern is selected on the basis of a comparison between the overall economic values of the semi-finished products (3) which can be obtained with each cutting pattern (4).

3. The method according to claim 2, **characterised in that** the actual cutting pattern is selected as the virtual cutting pattern (4), amongst those examined, which guarantees the maximum overall economic value of the semi-finished products (3) which can be obtained with it.

4. The method according to claims 2 or 3, **characterised in that** the economic value of the virtual semi-finished products (3) which can be obtained with each cutting pattern (4) is determined on the basis of the physical appearance of the semi-finished products (3) themselves.

5. The method according to any of the foregoing claims, **characterised in that** the virtual cutting patterns (4) each comprise a plurality of flat virtual cutting surfaces extending parallel with a main direction of extension of the piece of wood to be cut.

6. The method according to any of the foregoing claims, **characterised in that** two or more virtual cutting patterns (4) have virtual cutting surfaces with the same reciprocal orientation but with different orientation/positioning relative to the piece of wood.

7. The method according to any of the claims from 1 to 4, **characterised in that** the cutting patterns (4) each consist of at least one virtual cutting surface having a spiral shape.

8. The method according to claim 7, **characterised in that** the virtual cutting surfaces of each virtual cutting pattern (4) have a different orientation and/or positioning relative to the piece of wood.

9. The method according to claim 7 or 8, **characterised in that** the virtual cutting surfaces of each cutting pattern (4) have a different pitch.

10. The method according to any of the foregoing claims, **characterised in that** the step of obtaining a virtual three-dimensional model (1) of the density of a piece of wood is carried out by performing a tomographic scan of the piece of wood.

11. The method according to any of the foregoing claims, **characterised in that** the step of virtually associating the density with the basic volumes (2) is carried out with reference to all of the basic volumes (2) forming one or more of the main faces of each virtual semi-finished product.

## Patentansprüche

1. Verfahren zum Erkennen des Schnittbildes von Holzerzeugnissen, wie Baumstämme, enthaltend die folgenden Arbeitsschritte:
- Erstellen eines virtuellen dreidimensionalen Modells (1) eines Holzstückes;
- Wahl eines möglichen ersten virtuellen Schnittbildes (4) für das Holzstück, welches es erlauben kann, ein oder mehrere halbfertige Produkte (3) aus dem Holzstück zu erhalten, wobei die genannten Schnittbilder (4) aus einer oder mehreren virtuellen Schnittflächen (5), (6), (7) bestehen;
- virtuelles Anbringen des ersten virtuellen Schnittbildes (4) an dem dreidimensionalen Modell (1) des Holzstückes, um ein oder mehrere halbfertige Produkte (3) zu erhalten;
- Wiederholen der Wahl- und Anbringungsschritte für eine Anzahl von verschiedenen möglichen Schnittbildern (4), jedes entsprechend einem oder mehreren verschiedenen virtuellen halbfertigen Produkten (3);
- Vergleichen der virtuellen halbfertigen Produkte (3), welche mit den unterschiedlichen Schnittbildern (4) erhalten werden können, und auf der Basis des genannten Vergleichs die Wahl aus den virtuellen Schnittbildern (4) von einem Schnittbild (4), welches als Grundlage zum Fortfahren mit dem tatsächlichen Schneiden des Holzstückes verwendet werden kann;
wobei das Verfahren **dadurch gekennzeichnet ist,**
- **dass** der Schritt des Erhaltens eines virtuellen dreidimensionalen Modells (1) des Holzstückes im Erhalten eines virtuellen dreidimensionalen Modells (1) von der Dichte des Holzstückes besteht, wobei das genannte dreidimensionale Modell (1) aus einer Anzahl von Grundvolumen (2) besteht, jedes mit seiner eigenen gleichbleibenden Dichte;
- **dass** jedes des einen oder mehreren virtuellen halbfertigen Produkte (3) seine eigene äussere Oberfläche hat, gebildet durch die Schnittlinie der einen oder mehreren virtuellen Schnittflächen (5), (6), (7) und einer Reihe von aneinandergrenzenden Grundvolumen (2) unter jenen, die das dreidimensionale Modell (1) bilden;
- **dass** es ebenfalls den Schritt der virtuellen Zuordnung der entsprechenden Dichte, bestimmt auf der Basis des dreidimensionalen Modells (1), zu wenigstens einem Teil der Reihe von die virtuellen halbfertigen Produkte (3) bildenden Grundvolumen (2) enthält;
- **dass** bei dem Schritt der Wiederholung auch der Schritt der Zuordnung an der Anzahl der verschiedenen möglichen Schnittbilder (4) wiederholt wird;
- **dass** der Schritt der virtuellen Zuordnung der entsprechenden Dichte, bestimmt auf der Basis des dreidimensionalen Modells (1), zu wenigstens einem Teil der Reihe von die virtuellen halbfertigen Produkte (3) bildenden Grundvolumen (2), die Zuordnung der Dichte zu wenigstens einem Teil der Grundvolumen (2) einbezieht, welche die äussere Oberfläche von einem oder mehreren halbfertigen Produkten (3) bilden;
- **dass** der Zuordnungsschritt ausgeführt wird, um virtuell das physische Aussehen der halbfertigen Produkte (3) festzulegen; und
- **dass** der Schritt des Vergleichs der virtuellen halbfertigen Produkte (3), welche mit unterschiedlichen Schnittbildern (4) erhalten werden können, auf der Basis des virtuell festgelegten Aussehens der halbfertigen Produkte (3) durchgeführt wird.

2. Verfahren nach Patentanspruch 1, **dadurch gekennzeichnet, dass** es für jedes virtuelle Schnittbild (4) ebenfalls den Arbeitsschritt des Bestimmens des ökonomischen Wertes der virtuellen halbfertigen Produkte (3) enthält, welche mit den Schnittbildern (4) erhalten werden können, und auch **dadurch gekennzeichnet, dass** das aktuelle Schnittbild auf der Basis eines Vergleichs zwischen den gesamten ökonomischen Werten der halbfertigen Produkte (3) gewählt wird, welche mit jedem Schnittbild (4) erhalten werden können.

3. Verfahren nach Patentanspruch 2, **dadurch gekennzeichnet, dass** das aktuelle Schnittbild unter jenen überprüften als das virtuelle Schnittbild (4) gewählt wird, welches den maximalen ökonomischen Wert der halbfertigen Produkte (3) gewährleistet, die mit diesem erhalten werden können.

4. Verfahren nach Patentanspruch 2 oder 3, **dadurch gekennzeichnet, dass** der ökonomische Wert der virtuellen halbfertigen Produkte (3), die mit einem jeden Schnitt- bild erhalten werden können, auf der Basis des physischen Aussehens der halbfertigen Produkte (3) selbst festgelegt ist.

5. Verfahren nach einem jeden der vorstehenden Patentansprüche, **dadurch gekennzeichnet, dass** von den virtuellen Schnittbildern (4) jedes eine Anzahl von ebenen virtuellen Schnittflächen enthält, die sich parallel zu einer Hauptausdehnungsrichtung des zu schneidenden Holzstückes erstrecken.

6. Verfahren nach einem jeden der vorstehenden Patentansprüche, **dadurch gekennzeichnet, dass** zwei oder mehr virtuelle Schnittbilder (4) virtuelle Schnittflächen aufweisen, welche die gleiche Ausrichtung zueinander haben, jedoch mit unterschiedlicher Ausrichtung/Positionierung im Verhältnis zu dem Holzstück.

7. Verfahren nach einem jeden der Patentansprüche von 1 bis 4, **dadurch gekennzeichnet, dass** die Schnittbilder (4) jeweils aus wenigstens einer virtuellen, spiralförmigen Schnittfläche bestehen.

8. Verfahren nach Patentanspruch 7, **dadurch gekennzeichnet, dass** die virtuellen Schnittflächen eines jeden virtuellen Schnittbildes (4) eine unterschiedliche Ausrichtung und/oder Positionierung im Verhältnis zu dem Holzstück haben.

9. Verfahren nach Patentanspruch 7 oder 8, **dadurch gekennzeichnet, dass** die virtuellen Schnittflächen eines jeden Schnittbildes (4) einen unterschiedlichen Abstand haben.

10. Verfahren nach einem jeden der vorstehenden Patentansprüche, **dadurch gekennzeichnet, dass** der Schritt zum Erhalten eines virtuellen dreidimensionalen Modells (1) der Dichte eines Holzstückes in Form einer Tomografie des Holzstückes durchgeführt wird.

11. Verfahren nach einem jeden der vorstehenden Patentansprüche, **dadurch gekennzeichnet, dass** der Schritt der virtuellen Zuordnung der Dichte zu den Grundvolumen (2) durchgeführt wird unter Bezugnahme auf alle Grundvolumen (2), welche eine oder mehrere Hauptflächen eines jeden virtuellen halbfertigen Produktes bilden.

## Revendications

1. Un procédé pour déterminer un schéma de coupe pour des éléments en bois tels que des billons, comprenant les phases opérationnelles consistant à :
obtenir un modèle tridimensionnel virtuel (1);
sélectionner un premier schéma de coupe virtuel (4) possible pour l'élément en bois qui puisse permettre d'obtenir un ou plusieurs produits semi-finis (3) à partir dudit élément en bois, ledit schéma de coupe (4) consistant en une ou plusieurs surfaces de coupe virtuelles (5), (6), (7) ;
appliquer virtuellement le premier schéma de coupe virtuel (4) au modèle tridimensionnel (1) de l'élément en bois pour obtenir un ou plusieurs produits semi-finis virtuels (3) ;
répéter les phases de sélection et d'application pour une pluralité de schémas de coupe (4) possibles différents correspondant, chacun, à un ou plusieurs produits semi-finis virtuels (3) différents ;
comparer les produits semi-finis virtuels (3) qui peuvent être obtenus avec les différents schémas de coupe (4) et, sur la base de ladite comparaison, sélectionner parmi les schémas de coupe virtuels (4) un schéma de coupe (4) qui sera utilisé comme base pour procéder à la coupe réelle de l'élément en bois, le procédé étant **caractérisé :**
**en ce que** la phase consistant à obtenir un modèle tridimensionnel virtuel (1) de l'élément en bois consiste à obtenir un modèle tridimensionnel virtuel (1) de la densité de l'élément en bois, ledit modèle tridimensionnel (1) consistant en une pluralité de volumes de base (2) ayant chacun leur propre densité constante ;
**en ce que** chacun desdits un ou plusieurs produits semi-finis virtuels (3) a sa propre surface extérieure formée par l'intersection desdites une ou plusieurs surfaces de coupe virtuelles (5), (6), (7) et d'un ensemble de volumes de base adjacents (2) parmi ceux qui forment le modèle tridimensionnel (1) ;
**en ce qu'**il comprend aussi la phase consistant à associer virtuellement, à au moins une partie de l'ensemble de volumes de base (2) formant les produits semi-finis virtuels (3), la densité correspondante déterminée sur la base du modèle tridimensionnel (1) ;
**en ce que**, dans la phase de répétition, la phase d'association est elle aussi répétée pour la pluralité des schémas de coupe (4) possibles différents ;
**en ce que** la phase consistant à associer virtuellement, à au moins une partie de l'ensemble de volumes de base (2) formant les produits semi-finis virtuels (3), la densité correspondante déterminée sur la base du modèle tridimensionnel (1), prévoit d'associer la densité à au moins une partie des volumes de base (2) formant la surface extérieure desdits un ou plusieurs produits semi-finis (3) ;
**en ce que** la phase d'association est effectuée pour définir virtuellement l'aspect physique des produits semi-finis (3) ; et
**en ce que** la phase de comparaison des produits semi-finis virtuels (3) pouvant être obtenus avec les différents schémas de coupe (4) est effectuée sur la base de l'aspect physique virtuellement défini des produits semi-finis (3).

2. Le procédé selon la revendication 1, **caractérisé en ce qu'**il comprend aussi, pour chaque schéma de coupe virtuel (4), la phase opérationnelle consistant à déterminer la valeur économique des produits semi-finis virtuels (3) qui peuvent être obtenus avec le schéma de coupe (4), et également **caractérisé en ce que** le schéma de coupe réel est sélectionné sur la base d'une comparaison entre les valeurs économiques globales des produits semi-finis (3) pouvant être obtenus avec chaque schéma de coupe (4).

3. Le procédé selon la revendication 2, **caractérisé en ce que** le schéma de coupe réel est sélectionné comme étant le schéma de coupe virtuel (4), parmi ceux qui sont examinés, qui garantit la valeur économique globale maximale des produits semi-finis (3) pouvant être obtenus avec celui-ci.

4. Le procédé selon les revendications 2 ou 3, **caractérisé en ce que** la valeur économique des produits semi-finis virtuels (3) pouvant être obtenus avec chaque schéma de coupe (4) est déterminée sur la base de l'aspect physique des produits semi-finis (3) eux-mêmes.

5. Le procédé selon l'une quelconque des revendications précédentes, **caractérisé en ce que** les schémas de coupe virtuels (4) comprennent chacun une pluralité de surfaces de coupe virtuelles plates s'étendant parallèlement à une direction principale d'extension de l'élément en bois à couper.

6. Le procédé selon l'une quelconque des revendications précédentes, **caractérisé en ce que** deux ou plusieurs schémas de coupe virtuels (4) ont des surfaces de coupe virtuelles ayant la même orientation réciproque mais avec une orientation différente /un positionnement différent par rapport à l'élément en bois.

7. Le procédé selon l'une quelconque des revendications de 1 à 4, **caractérisé en ce que** les schémas de coupe (4) consistent chacun en au moins une surface de coupe virtuelle ayant la forme d'une spirale.

8. Le procédé selon la revendication 7, **caractérisé en ce que** les surfaces de coupe virtuelles de chaque schéma de coupe virtuel (4) ont une orientation différente et/ou un positionnement différent par rapport à l'élément en bois.

9. Le procédé selon la revendication 7 ou 8, **caractérisé en ce que** les surfaces de coupe virtuelles de chaque schéma de coupe (4) ont un pas différent.

10. Le procédé selon l'une quelconque des revendications précédentes, **caractérisé en ce que** la phase consistant à obtenir un modèle tridimensionnel virtuel (1) de la densité d'un élément en bois est effectuée en exécutant un balayage tomographique de l'élément en bois.

11. Le procédé selon l'une quelconque des revendications précédentes, **caractérisé en ce que** la phase consistant à associer virtuellement la densité aux volumes de base (2) est effectuée en se référant à tous les volumes de base (2) formant une ou plusieurs des faces principales de chaque produit semi-fini virtuel.
